# EUROPEAN PATENT SPECIFICATION

(11) **EP 2 360 209 B1**
(45) Date of publication and mention of the grant of the patent: **21.08.2013**
(21) Application number: 10425033.7
(22) Date of filing: 15.02.2010
(51) Int. Cl.: C08L 67/04, B29C 49/04

(54) **Use of a biodegradable container for packaging and preserving liquid food products**
Verwendung bioabbaubarer Behälter zum Aufbewahren und Konservieren flüssiger Nahrungsmittel
Utilisation d'un récipient biodégradable pour le conditionnement et la conservation des aliments liquides

(43) Date of publication of application: 24.08.2011
(73) Proprietor: Polenghi-Las S.r.l., 26865 San Rocco Al Porto (LO) (IT)
(72) Inventor: Polenghi, Giancarlo, 26849 Santo Stefano Lodigiano Lodi (IT); Polenghi, Marco, 26849 Santo Stefano Lodigiano Lodi (IT); Bignami, Mario, 26849 Santo Stefano Lodigiano Lodi (IT); Caminiti, Cristiana, 29122 Piacenza (IT)
(74) Representative: Biggi, Cristina

(56) References cited:
- US-A1- 2007 037 912
- US-A1- 2007 210 492
- US-A1- 2007 259 195
- US-A1- 2008 153 940

## Description

The present invention relates to a container for food liquids made of biodegradable plastic material. In particular, the invention relates to the use of a container made of biodegradable plastic material suitable to contain food liquids (such as juices, seasonings etc.) characterized by an acid pH value.

Biodegradability is the property of organic substances and of some synthetic compounds of being decomposed by nature, or better by saprophytic bacteria. This property enables the planet ecological balance to be kept regular.

A decomposable substance is attacked by some microorganisms extracting from it the enzymes required for the decomposition into simple products, then the element is completely absorbed into the soil. Conversely, a non-decomposable substance (or decomposable in the long term) remains in the soil without being absorbed, causing pollution and various environmental problems. In order to be defined as compostable, a product must be "biodegradable" and "disintegrable" in short times, i.e. it must be transformed by microorganisms into water, carbon dioxide and fertile compost. Biodegradable materials can be decomposed into very small parts thanks to a biological activity and to the changes in the chemical structure of the material. Conversely, materials which are totally decomposed when exposed to given conditions without leaving any visible or toxic residue, are defined as compostable. In other words, composting is the complete biodegradability process.

European standard UNI EN 13432, "Packaging - Requirements for packaging recoverable through composting and biodegradation - Test scheme and evaluation criteria for the final acceptance of packaging", relates to all types of materials and packaging for any kind of product. It specifies requirements and procedures for determining the possibility of composting and anaerobic treatment for packaging and materials making up the packaging, taking into account four characteristics:
1) biodegradability;
2) disintegration during biological treatment;
3) effect on the biological treatment process;
4) effect on the quality of resulting compost. Environmental and ecological considerations would make

it desirable that all packaging used for any type of product were biodegradable. Thus, a great contribution would be given to environmental preservation and protection.

The materials which packaging is made of, beyond being biodegradable, should be able to meet the requirements of industrial manufacturing processes for packaging, and to adapt to the various characteristics and types of product they must contain. The latter requirement is particularly relevant in food industry, wherein items to be preserved have peculiar features greatly varying from one product to the other, depending on the nature thereof.

For instance, food products can be solid or liquid, they must be packaged at room temperature or frozen, or further they must be preserved in inert atmosphere. Some foodstuffs can have highly acid pH values, such as citrus fruit juices or other fruit juices, or seasonings, such as lemon juice and vinegar.

In the light of the various needs of food industry, it is often hard to choose, among the various biodegradable raw materials approved for food use and present on the market, a material which can be used with the industrial process normally applied for manufacturing the desired packaging, and which ensures at the same time optimal conditions for food preservation.

In the specific case of containers for liquid food, it is necessary to choose and use a biodegradable material which can be subjected to the packaging manufacturing process and which can ensure at the same time the preservation of food in liquid form. If liquid foods are characterized by an acid pH value, such as e.g. seasonings and fruit juices, the selected material must also be resistant to corrosion due to particularly acid pH values.

US2007/259195 refers to a polylactic acid composition, for making biodegradable articles, such as laminated articles, that can be used as biodegradable heat resistant containers for generic beverage and food. There is In particular disclosed the use of a composition comprising PLA (poly lactic acid) polymer and a biodegradable nucleating polymer, which can be an aliphatic-aromatic copolyester, for the preparation of a biodegradable article having improved transparent and heat resistant properties.

The technical problem faced and solved by the Applicant for the present patent application is to provide a container for liquid food made of biodegradable material, which can be subjected to the normal packaging manufacturing process (extrusion-blowing process) and which, in the case of food with an acid pH value, is resistant to degradation under such conditions.

The technical problem referred to above is solved by providing a container for liquid food as defined in claim 1, for the use of packaging and preserving acid liquid food with a pH value of 1 to 3.

The detailed description of the invention is disclosed in the following also referring to the accompanying figures, in which:
- Figure 1 shows an extruder used in the extrusion-blowing process for manufacturing the container according to the invention;
- Figure 2 shows the plastic material getting out of the extruder head as a cylindrical tube (known as parison);
- Figure 3 shows the parison being closed in the mold;
- Figure 4 shows the parison being cut;
- Figure 5 shows the insertion of the blowing nozzle into the mold containing the parison;
- Figure 6 shows the final step in which the container having the desired shape is obtained after blowing and mold opening.

The present invention relates to the use of a container for liquid food, in particular for acid liquid food, comprising a mixture of polylactic acid and an aromatic-aliphatic copolyester obtained by copolymerization of at least.the monomers 1,4-butanediol, adipic acid and terephthalic acid (or dimethyl terephthalate).

In a preferred form, the aromatic-aliphatic copolyester is Ecoflex® by BASF.

The aromatic-aliphatic copolyester has properties resembling those of polyethylene (PE) but it is advantageously biodegradable. This material stands out for its peculiar properties during processing and use, such as tear resistance and elasticity, water tightness and resistance to humidity variations. The aromatic-aliphatic copolyester, in particular Ecoflex®, meets all the conditions of standard UNI EN 13432. Polylactic acid (PLA) is a polymer of vegetable origin produced by NatureWorks,

PLA is obtained by a process involving fermentation, separation and polymerization of maize starch. In detail, the starch molecule ia first split by hydrolysis into dextrose molecules, which in their turn, through a fermentation and distillation process, are turned into lactic acid; eventually, lactic acid is subjected to polymerization and is turned into polylactic acid. Polylactic acid is the only biopolymer in the world with plastic characteristics to be 100% produced from renewable vegetable resources. In order to produce PLA granules (resin), the production plant extracts carbon naturally present in maize sugars during photosynthesis. 1,4 kg of lactic acid, corresponding to 2,8 kg of maize, are required to produce 1 kg of PLA.

The main characteristics of PLA are:
- 100% renewable;
- biodegradable/compostable;
- excellent transparency;
- stiffness and strength;
- resistance to crushing;
- resistance to oils and fats;
- barrier against flavors and oxygen.

PLA is included in the mixture making up the material used for manufacturing the container in an amount of 60% to 90% by weight, preferably of 70% to 85% by weight, whereas the aromatic-aliphatic copolyester is included in an amount of 10% to 40% by weight, preferably of 15% to 30% by weight.

The mixture can further comprise other additives, e.g. coloring agents.

The container for liquid food product according to the invention can be used for seasonings or juices in liquid form. The container is particularly suitable to preserve acid liquid food, having a pH value of 1 to 3, since it proved resistant to acid degradation.

The container can be used for packaging e.g. seasonings such as lemon juice or vinegar, and fruit juices, including e.g. citrus fruit or apple juices.

The container according to the invention is manufactured using the technique known as extrusion-blowing, whose operating conditions (temperature and pressure) were designed so as to adapt to the particular nature of the plastic material used as starting material. Extrusion-blowing is a technique for manufacturing hollow objects made of plastic (vials, bottles etc.), including the extrusion of the plastic material so as to obtain a cylinder of melted material known as "parison", and then the adhesion of the material to the mold walls by mean of a jet of air blown into the mold by way of a nozzle.

The process for manufacturing the container according to the invention comprises the following steps:
a) mixing polylactic acid with aromatic-aliphatic copolyester;
b) melting and homogenizing the mixture in an extruder at a temperature of 120-160°C:
c) extruding the mixture from the extrusion head until formation of a cylindrical tube known as parison;
d) introducing the parison into the mold and then welding the lower part and cutting the upper part;
e) injecting blowing air into the mold at a pressure of 5-15 bar, and simultaneously cooling the mold and the container;
f) removing burrs from the container (sprue removal) .

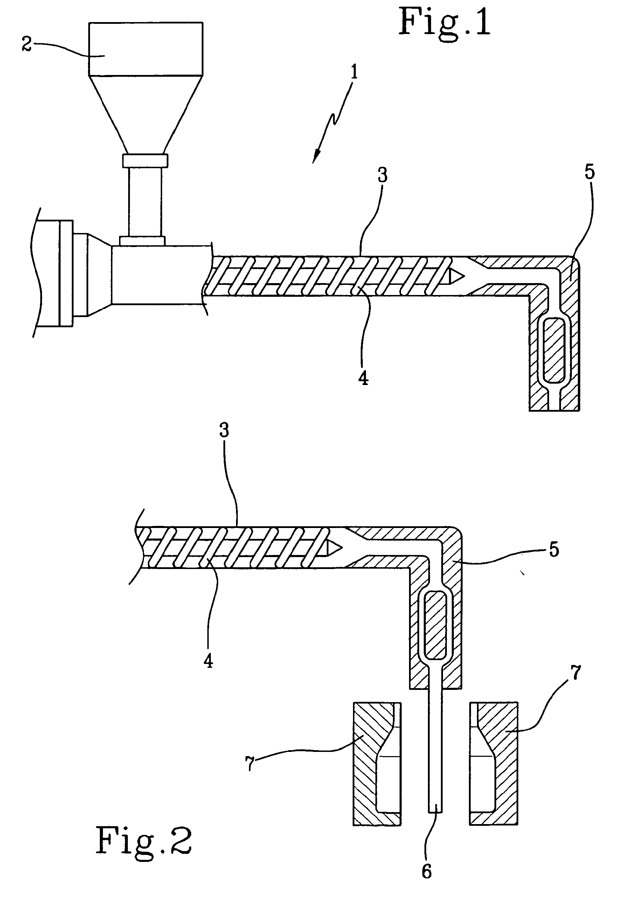

With reference to Figure 1, the numeral 1 refers globally to the extruder.

After being subjected to mixing in a mixer at a speed of 100-300 rpm, preferably 150-250 rpm (step a)) so as to obtain a granule product, the mixture of polylactic acid and aromatic-aliphatic copolyester is introduced into the extruder by means of the loading feeder 2. The feeder loads the granule plastic material arriving by means of a pneumatic conveying system directly from storing tanks.

Thus the mixture reaches the plasticization compartment 3 comprising an extrusion screw 4, arranged inside a cylinder heated externally by electric resistors, which thanks to its rotation pushes, presses, melts and homogenizes the granule plastic material. The temperature reached is of 120-160°C, preferably of 130-150°C (step b)) (Figure 1).

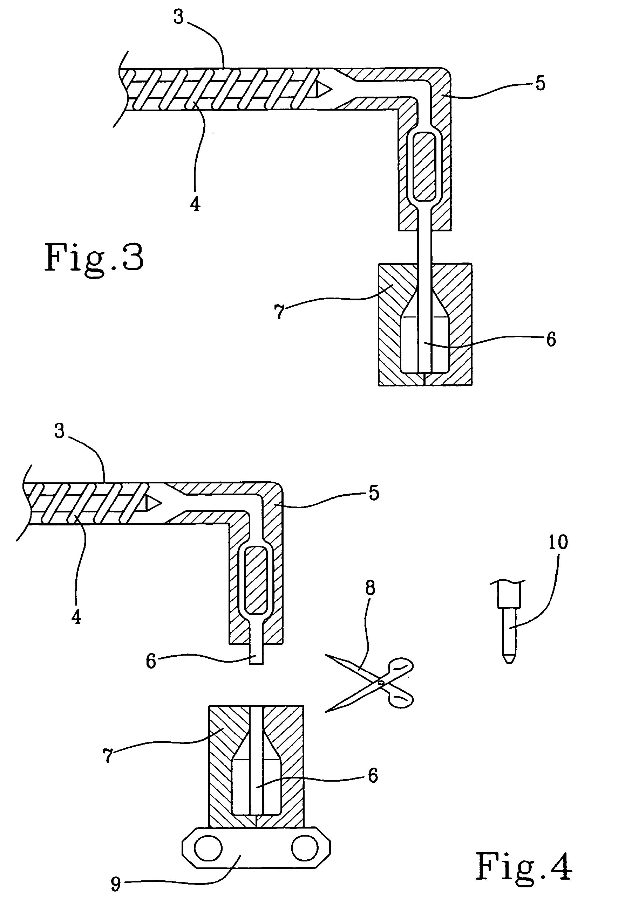

The melted and homogenized mixture is pushed by the extrusion screw into the extrusion head 5, comprising a converging die having inside a nozzle through which the mixture gets out in the form of a cylindrical tube of melted material (parison) 6 (step c) (Figure 2). The parison 6 is closed inside a mold 7, preferably made of stainless steel or aluminum, divided into two parts. The separation of the parison from the mixture getting out of the extruder head takes place by cutting, preferably hot cutting, with suitable blades 8 (step d)) (Figure 4).

The mold containing the parison is conveyed into the calibration and blowing machine by means of a suitable conveying device 9 (Figure 4).

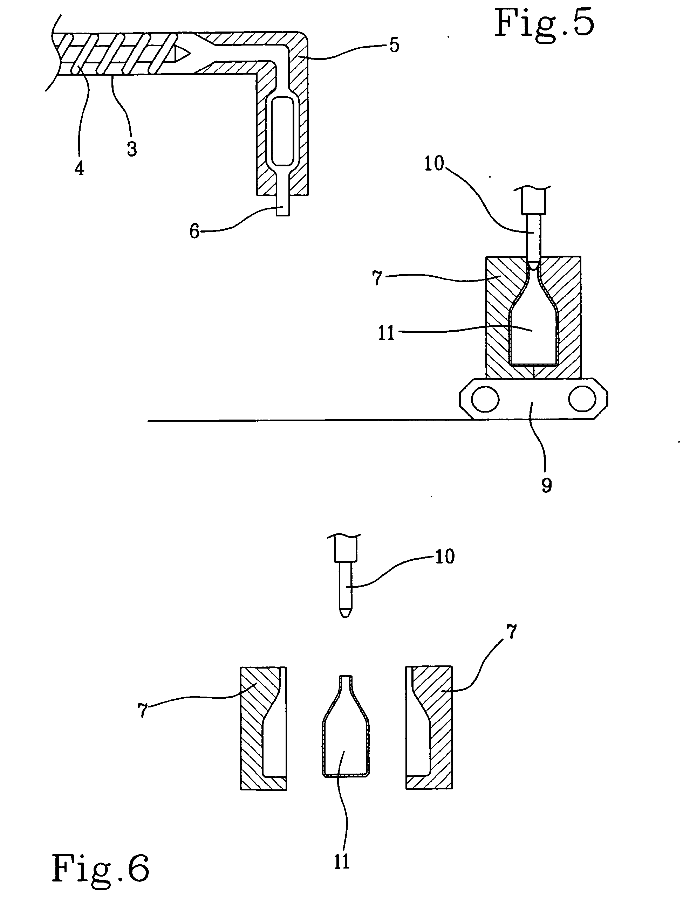

The calibration and blowing machine is made up of a calibrating mandrel or nozzle 10, which gets into the tube inside the mold so as to form the object neck and simultaneously introduce air, which makes the material adhere to the mold walls, obtaining the desired shape. The pressure applied is of 5 to 15 bar, preferably of 5 to 10 bar (step e)) (Figure 5).

The mold is provided with a closed-circuit water cooling system which adjusts temperature to 5-20°C, preferably to 8-15°C (step e)).

Step f) includes mold removal and conveyance of the finished product 11 thus obtained (Figure 6) first to the burr removal station (known as sprue removal) and then to the bottle filling step, which occurs by usual methods known in the field.

### EXAMPLE

A mixture of 87% PLA Ingeo and 13% Ecoflex BASF is produced with the process described above under the following operating conditions:
1) temperature of extruder heating zone and head: 150°C;
2) mold cooling temperature: 13°C;
3) blowing air pressure: 7 bar.

The food container thus obtained is biodegradable and compostable according to standard UNI 13432 and is used for packaging lemon juice (pH about 2,5).

### ADVANTAGES

The present invention provides a container which is used for preserving liquid food with a pH value of 1 to 3, in particular juices or seasonings characterized by an acid pH value, such as e.g. lemon juice or vinegar;

The advantages of using such a container are evident: being biodegradable it protects the environment and renewable resources; it can be obtained with an extrusion-blowing process without modifying already existing plants for normal processing of polyethylene; obviously, this enables to lower costs to the benefit of end users.

Though having biodegradability characteristics, the container is however sufficiently resistant to enable the preservation of particularly problematic food, such as acid seasonings (lemon juice and vinegar) .

## Claims

1. Use of a biodegradable container comprising a mixture of polylactic acid and an aromatic-aliphatic copolyester obtained by copolymerization of at least the monomers 1,4-butanediol, adipic acid and terephthalic acid or dimethyl terephthalate, for packaging and preserving liquid food with a pH value of 1 to 3.

2. Use of the biodegradable container according to claim 1, wherein said aromatic-aliphatic copolyester is Ecoflex®.

3. Use of the biodegradable container according to claim 1, wherein said polylactic acid is included in said mixture in an amount of 60% to 90% by weight, preferably of 70% to 85% by weight.

4. Use of the biodegradable container according to any one of the claims 1 to 3, wherein said aromatic-aliphatic copolyester is included in said mixture in an amount of 10% to 40% by weight.

5. Use of the biodegradable container according to claims 1-4, wherein said aromatic-aliphatic copolyester is included in said mixture in an amountof 15% to 30% by weight.

6. Use of the biodegradable container according to any one of the claims 1 to 5, wherein said mixture further comprises coloring agents.

7. Use according to any one of the preceding claims, wherein said liquid food includes seasonings or fruit juices.

8. Use according to claim 7, wherein said seasonings are lemon juice or vinegar.

9. Use according to claim 7, wherein said juices are citrus fruit or apple juices.

## Patentansprüche

1. Verwendung eines biologisch abbaubaren Behälters, umfassend ein Gemisch aus Polymilchsäure und einem aromatisch-aliphatischen Copolyester, erhalten durch Copolymerisation von mindestens den Monomeren 1,4-Butandiol, Adipinsäure und Terephthalsäure oder Dimethylterephtalat zum Verpacken und Konservieren von flüssigen Lebensmitteln mit einem pH-Wert von 1 bis 3.

2. Verwendung des biologisch abbaubaren Behälters nach Anspruch 1, wobei das aromatisch-aliphatische Copolyester Ecoflex® ist.

3. Verwendung des biologisch abbaubaren Behälters nach Anspruch 1, wobei die Polymilchsäure im Gemisch in einer Menge von 60 bis 90 Gew.-%, vorzugsweise von 70 bis 85 Gew.-%, enthalten ist.

4. Verwendung des biologisch abbaubaren Behälters nach einem der Ansprüche 1 bis 3, wobei das aromatischaliphatische Copolyester im Gemisch in einer Menge von 10 bis 40 Gew.-% enthalten ist.

5. Verwendung des biologisch abbaubaren Behälters nach den Ansprüchen 1 bis 4, wobei das aromatischaliphatische Copolyester im Gemisch in einer Menge von 15 bis 30 Gew.-% enthalten ist.

6. Verwendung des biologisch abbaubaren Behälters nach einem der Ansprüche 1 bis 5, wobei das Gemisch ferner Farbstoffe umfasst.

7. Verwendung nach einem der vorangehenden Ansprüche, wobei das flüssige Lebensmittel Würzmittel oder Fruchtsäfte enthält.

8. Verwendung nach Anspruch 7, wobei die Würzmittel Zitronensaft oder Essig sind.

9. Verwendung nach Anspruch 7, wobei die Säfte Zitrusfrucht- oder Apfelsäfte sind.

## Revendications

1. Utilisation d'un récipient biodégradable comprenant un mélange d'acide polylactique et d'un copolyester aromatique-aliphatique obtenu par copolymérisation d'au moins des monomères butanediol-1,4, acide adipique et acide téréphtalique ou téréphtalate de diméthyle, pour l'emballage et la conservation d'un aliment liquide ayant un pH compris entre 1 et 3.

2. Utilisation du récipient biodégradable selon la revendication 1, dans lequel ledit copolyester aromatique-aliphatique est un Ecoflex®.

3. Utilisation du récipient biodégradable selon la revendication 1, dans lequel ledit acide polylactique est inclus dans ledit mélange dans une quantité comprise entre 60 % et 90 % en poids, de préférence entre 70 et 85 % en poids.

4. Utilisation du récipient biodégradable selon l'une quelconque des revendications de 1 à 3, dans lequel ledit copolyester aromatique-aliphatique est inclus dans ledit mélange dans une quantité comprise entre 10% à 40% en poids.

5. Utilisation d'un récipient biodégradable selon les revendications 1 à 4, dans lequel ledit copolyester aromatique-aliphatique est inclus dans ledit mélange dans une quantité comprise entre 15 % et 30 % en poids.

6. Utilisation d'un récipient biodégradable selon l'une quelconque des revendications de 1 à 5, dans lequel ledit mélange comprend de plus des colorants.

7. Utilisation selon l'une quelconque des revendications précédentes, dans laquelle ledit aliment liquide comporte des assaisonnements ou des jus de fruit.

8. Utilisation selon la revendication 7, dans laquelle lesdits assaisonnements sont du jus de citron ou du vinaigre.

9. Utilisation selon la revendication 7, dans laquelle lesdits jus sont des jus de citron ou de pomme.
